# EUROPEAN PATENT APPLICATION

(11) **EP 4 063 787 A1**
(43) Date of publication of application: **28.09.2022**
(21) Application number: 22163048.6
(22) Date of filing: 18.03.2022
(51) Int. Cl.: G01C 15/00, G01S 17/42, G02B 26/10

(54) **SURVEYING SYSTEM**

(30) Priority: 23.03.2021 JP 2021048886
(71) Applicant: TOPCON CORPORATION, Tokyo 174-8580 (JP)
(72) Inventor: MATSUMOTO, Masae, Tokyo (JP)
(74) Representative: Mewburn Ellis LLP

(57) **Abstract**

The surveying device main unit includes: a distance-measuring light-emitting unit; a light-receiving unit; a distance-measuring unit; an optical axis-deflecting unit; an emitting direction-detecting unit; and an arithmetic control unit. The arithmetic control unit controls two-dimensional scanning with a scanning pattern having an intersection at which an outward passage and a return passage of the two-dimensional scanning intersect, updates three-dimensional data of the measurement target each time a light-receiving signal is detected during the two-dimensional scanning, generates weights for detecting a reference point of the measurement target and for detecting a rotation angle of the measurement target in accordance with the distance from the intersection, each time the three-dimensional data is updated, and tracks the measurement target based on the reference point position and the rotation angle of the measurement target calculated using the weights.

## Description

### BACKGROUND OF THE INVENTION

### 1. Field of the Invention

The present invention relates to a surveying system having a tracking function.

### 2. Description of the Related Art

A total station is an example of a surveying system having a tracking function. The total station collimates a measurement target using a high magnification telescope, which also functions as a distance-measuring optical system, executes the measurement, then horizontally/vertically rotates the telescope, collimates a different measurement target and sequentially executes measurement for each measurement target. The total station also tracks movement of a measurement target and horizontally/vertically rotates the telescope accordingly, collimates the measurement target, and executes the measurement.

However, in the case where the surveying system tracks a measurement target, the surveying system may have trouble tracking the movement of the measurement target when the measurement target moves fast, and in some cases may lose the measurement target. Once a measurement target is lost, the surveying system searches for the measurement target, but recapturing the measurement target may take time. Therefore a cause of dropping the operability of measurement has been that the surveying system has difficulty in tracking the measurement target when the measurement target moves fast.

[Patent Literature 1] Japanese Patent Application Publication No. 2019-196983

### SUMMARY OF THE INVENTION

With the foregoing in view, it is an object of the present invention to provide a surveying system that can track a measurement target more precisely.

The above problem is solved by a surveying system including: a measurement target including a retro-reflector; and a surveying device main unit that emits a distance-measuring light and measures the measurement target based on reflected distance-measuring light from the retro-reflector. The surveying device main unit includes: a distance-measuring light-emitting unit that includes a light-emitting element to emit the distance-measuring light and emits the distance-measuring light onto a distance-measuring optical axis; a light-receiving unit that receives the reflected distance-measuring light and includes a light-receiving element to generate a light-receiving signal; a distance-measuring unit that measures a distance of the measurement target based on the light-receiving signal from the light-receiving element; an optical axis-deflecting unit that includes a reference optical axis and deflects the distance-measuring optical axis from the reference optical axis; an emitting direction-detecting unit that detects a deflection angle of the distance-measuring optical axis from the reference optical axis and a direction of the deflection angle; and an arithmetic control unit that controls a deflection function of the optical axis-deflecting unit and a distance-measuring function of the distance-measuring unit. The optical axis-deflecting unit includes: a pair of optical prisms that are rotatable centering around the reference optical axis; and a motor that individually rotates the optical prisms independently from each other. The arithmetic control unit: controls the deflection caused by the optical axis-deflecting unit by controlling the rotation direction, rotation speed and rotation ratio of the pair of optical prisms; executes two-dimensional scanning with the distance-measuring light with the distance-measuring optical axis as an approximate center, and controls the two-dimensional scanning with the scanning pattern having an intersection at which an outward passage and a return passage of the two-dimensional scanning intersect; updates three-dimensional data of the measurement target based on a deflection angle data, which is a detection result by the emitting direction-detecting unit, and a distance measurement data, which is a detection result by the distance-measuring unit, each time the light-receiving signal is detected during the two-dimensional scanning; generates weights for detecting a reference point of the measurement target and for detecting a rotation angle of the measurement target in accordance with the distance from the intersection, each time the three-dimensional data is updated; and tracks the measurement target based on the reference point position and the rotation angle of the measurement target calculated using the weights.

According to the surveying system of the present invention, the arithmetic control unit controls the deflection caused by the optical axis-deflecting unit, executes the two-dimensional scanning with the distance-measuring light with the distance-measuring optical axis as an appropriate center, and controls the two-dimensional scanning with the scanning pattern having an intersection at which an outward passage and a return passage of the two-dimensional scanning intersect. Then each time the light-receiving signal is detected during the two-dimensional scanning, the arithmetic control unit updates the three-dimensional data of the measurement target based on the deflection angle data, which is a detection result by the emitting direction-detecting unit, and the distance measurement data, which is a detection result of the distance-measuring unit. Since the arithmetic control unit acquires and updates the three-dimensional data each time the light-receiving signal is detected during the two-dimensional scanning, the measurement target can be tracked at high-speed even if a predetermined amount of three-dimensional data is not stored. Here, each time the three-dimensional data is updated, the arithmetic control unit generates weights for detecting the reference point of the measurement target and for detecting the rotation angle of the measurement target in accordance with the distance from the intersection in the scanning pattern, and tracks the measurement target based on the reference point position and the rotation angle of the measurement target calculated using the weights. Therefore even in a case where the three-dimensional data is acquired and updated each time the light-receiving signal is detected during the two-dimensional scanning, the arithmetic control unit can decrease the time required for the arithmetic processing, and track the measurement target at high-speed. Thereby the surveying system of the present invention can track a measurement target more precisely with decreasing the possibility of losing the measurement target.

In the surveying system of the present invention, it is preferable that the arithmetic control unit generates the weight for detecting the reference point such that the value increases as the distance from the intersection decreases.

According to the surveying system of the present invention, the arithmetic control unit generates the weight for detecting the reference point such that the value increases as the distance from the intersection of the scanning pattern decreases. Therefore the arithmetic control unit can detect the reference point of the measurement target at higher accuracy. Thereby the surveying system of the present invention can track a measurement target more precisely.

In the surveying system of the present invention, it is preferable that the arithmetic control unit generates the weight for detecting the rotation angle such that the value increases as the distance from the intersection increases.

According to the surveying system of the present invention, the arithmetic control unit generates the weights for detecting the rotation angle of the measurement target such that the value increases as the distance from the intersection of the scanning pattern increases. Therefore the arithmetic control unit can detect the rotation angle of the measurement target at higher accuracy. Thereby the surveying system of the present invention can track a measurement target more precisely.

In the surveying system of the present invention, it is preferable that, for detecting the rotation angle of the measurement target, the arithmetic control unit further generates first correction data in which an intensity distribution of the light-receiving signal is reversed at a first coordinate axis of the orthogonal coordinate axes in the two-dimensional scanning, and second correction data in which the intensity distribution of the light-receiving signal is reversed at a second coordinate axis of the orthogonal axes, and tracks the measurement target based on the rotation angle calculated using the weight for detecting the rotation angle generated in accordance with the distance from the intersection, and at least one of the first correction data and the second correction data.

According to the surveying system of the present invention, for detecting the rotation angle of the measurement target, the arithmetic control unit further generates the first correction data in which the intensity distribution of the light-receiving signal is reversed at a first coordinate axis of the orthogonal coordinate axes in the two-dimensional scanning. Moreover, for detecting the rotation angle of the measurement target, the arithmetic control unit further generates the second correction data in which the intensity distribution of the light-receiving signal is reversed at a second coordinate axis of the orthogonal coordinate axes in the two-dimensional scanning. Then the arithmetic control unit tracks the measurement target based on the rotation angle of the measurement target calculated using the weight for detecting the rotation angle generated in accordance with the distance from the intersection of the scanning pattern, and at least one of the first correction data and the second correction data. Therefore even in a case where the arithmetic control unit generates the weights for detecting the reference point of the measurement target and for detecting the rotation angle of the measurement target in accordance with the distance from the intersection of the scanning pattern, it can be prevented that the intensity distributions of the light-receiving signal cancel each other. Thereby the surveying system of the present invention can track the measurement target more precisely.

In the surveying system of the present invention, it is preferable that the arithmetic control unit generates the first correction data by reversing the intensity distribution of the light-receiving signal at the first coordinate axis and then further inverting only the intensity distribution, which was reversed at the first coordinate axis, with the second coordinate axis as the center, and generates the second correction data by reversing the intensity distribution of the light-receiving signal at the second coordinate axis and then further inverting only the intensity distribution, which was reversed at the second coordinate axis, with the first coordinate axis as the center.

According to the surveying system of the present invention, the arithmetic control unit generates the first correction data by reversing the intensity distribution of the light-receiving signal at the first coordinate axis, and then further inverting only the intensity distribution, which was reversed at the first coordinate axis, with the second coordinate axis as the center. Moreover, the arithmetic control unit generates the second correction data by reversing the intensity distribution of the light-receiving signal at the second coordinate axis, and then further inverting only the intensity distribution, which was reversed at the second coordinate axis, with the first coordinate axis as the center. Therefore even in a case where the measurement target does not extend in the horizontal and vertical directions, that is, even in a case where the measurement target inclines with respect to the horizontal and vertical directions, it can be prevented that the intensity distributions of the light-receiving signal cancel each other. Thereby the surveying system of the present invention can track the measurement target more precisely.

According to the present invention, a surveying system that can track the measurement target more precisely can be provided.

### BRIEF DESCRIPTION OF THE DRAWINGS

FIG. 1 is a schematic perspective view depicting a surveying system according to an embodiment of the present invention;
FIG. 2 is a front view depicting a surveying device main unit of the surveying system according to the present embodiment;
FIG. 3 is a block diagram depicting a general configuration of the surveying device main unit of the present embodiment;
FIG. 4 is a schematic diagram for describing a function of an optical axis-deflecting unit of the present invention;
FIG. 5 is a schematic diagram depicting an example of a scanning pattern;
FIG. 6 is a schematic diagram depicting another example of a scanning pattern;
FIG. 7 is a schematic diagram for describing the relationship between a scanning pattern and a target device;
FIG. 8 is a block diagram depicting a general configuration of an arithmetic control unit of the present embodiment;
FIGS. 9A to 9C are schematic diagrams depicting a first example of reversing and inverting the intensity distribution of the light-receiving signal from the light-receiving element;
FIGS. 10A to 10C are schematic diagrams depicting a second example of reversing and inverting the intensity distribution of the light-receiving signal from the light-receiving element;
FIGS. 11A to 11C are schematic diagrams depicting a third example of reversing and inverting the intensity distribution of the light-receiving signal from the light-receiving element; and
FIGS. 12A to 12C are schematic diagrams depicting a fourth example of reversing and inverting the intensity distribution of the light-receiving signal from the light-receiving element.

### DESCRIPTION OF THE PREFERRED EMBODIMENTS

Preferred embodiments of the present invention will be described in detail with reference to the drawings.

The embodiments to be described below are preferred examples of the present invention which are limited in various ways to be technically favorable, but the scope of the present invention is not limited to these modes unless the following description specifies a particular limitation of the present invention. In each drawing, a same composing element is denoted with a same reference sign, and a redundant detailed description will be omitted.

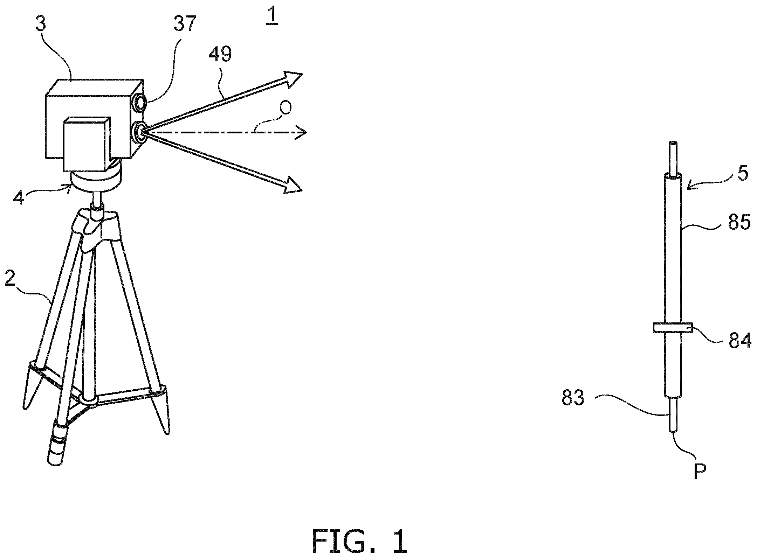

FIG. 1 is a schematic perspective view depicting a surveying system according to an embodiment of the present invention.

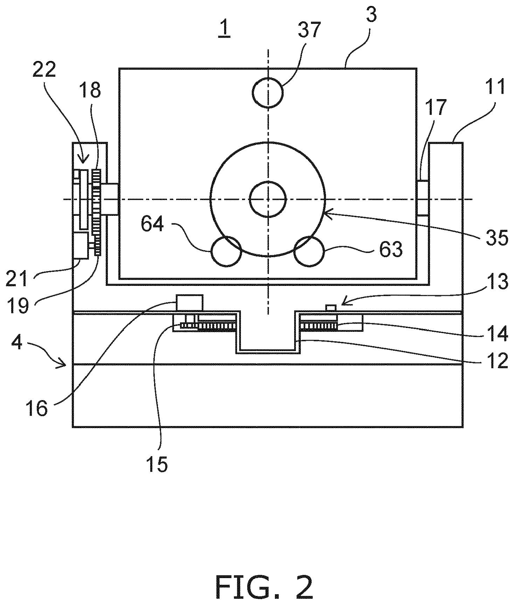

FIG. 2 is a front view depicting a surveying device main unit of the surveying system according to the present embodiment.

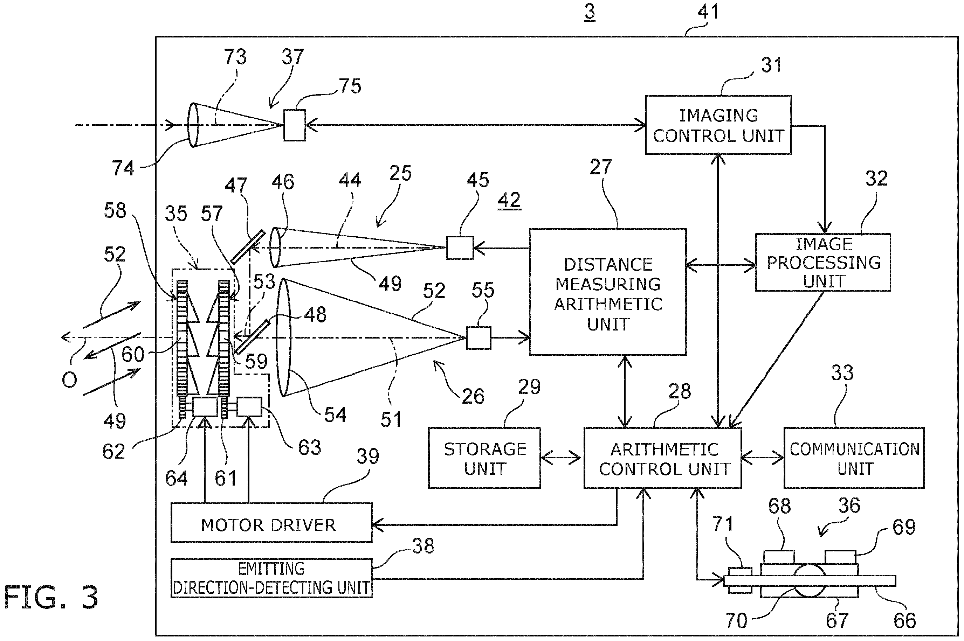

FIG. 3 is a block diagram depicting a general configuration of the surveying device main unit of the present embodiment.

The surveying system 1 according to the present embodiment mainly includes a tripod 2 (support device), a surveying device main unit 3 (light wave distance meter), an installation base 4 on which the surveying device main unit 3 is installed, a target device 5 which is installed at a measurement point P, and a terminal 6 which can remotely control the surveying device main unit 3.

The terminal 6 is a portable device having a display function, a communication function and an arithmetic processing function. For the terminal 6, a smartphone, a tablet, a notebook personal computer, or the like can be used, for example. The terminal 6 transmits instructions on measurement to the surveying device main unit 3, receives measurement data, image data, and the like acquired by the surveying device main unit 3, and stores the data, displays the data, or processes the data, for example.

The installation base 4 is attached to the upper end of the tripod 2. The surveying device main unit 3 is installed on the installation base 4. The installation base 4 rotatably supports the surveying device main unit 3.

The target device 5 includes a pole 83, which is a rod-shaped support member of which cross-section is circular, and a reference-reflecting unit 84 (target) disposed in the middle of the pole 83. The reference-reflecting unit 84 has a circular cross-section that is concentric with the pole 83, and a reflection sheet, which is a retro-reflector, is completely wrapped around the reference-reflecting unit 84.

The reflection sheet (retro-reflector) is also completely wrapped around the pole 83, such that the pole 83 is partially exposed at the top and bottom. The portion wrapped with the reflection sheet constitutes a linear-reflecting unit 85 that has a predetermined vertical length. The reference-reflecting unit 84 and the linear-reflecting unit 85 reflect the distance-measuring light respectively and become the distance-measuring targets of the surveying system 1. The reference-reflecting unit 84 is a target indicating a reference point (described later), and the linear-reflecting unit 85 is an auxiliary-reflecting unit to make it easier to detect the measurement targets, and to detect the reference-reflecting unit 84 in particular.

The bottom end of the pole 83 is pointed so as to indicate the measurement point P.

The target device 5 has a reference point at a predetermine position from the bottom end of the pole 83. The reference-reflecting unit 84 is disposed on the pole 83, and the center of the reference-reflecting unit 84 is the reference point. The distance between the reference point and the bottom end of the pole 83 is known.

Just like the linear-reflecting unit 85, the reflection sheet is completely wrapped around the reference-reflecting unit 84. The reference-reflecting unit 84 has a predetermined thickness (length in the axial direction) that is longer than the beam diameter of the distance-measuring light, and is thicker than the diameter of the linear-reflecting unit 85.

Here the diameter difference between the reference-reflecting unit 84 and the linear-reflecting unit 85 is determined in accordance with the measurement accuracy of the surveying device main unit 3. This diameter difference may be any value as long as it is not less than the measurement accuracy (measurement error) of the surveying device main unit 3. In other words, the diameter difference may be any value as long as the reference-reflecting unit 84 and the linear-reflecting unit 85 can be distinguished based on the distance measurement results of the reference-reflecting unit 84 and the linear-reflecting unit 85. Needless to say, the diameter difference is determined in accordance with the diameter of the linear-reflecting unit 85, the measurement conditions, the measurement capabilities of the surveying device main unit 3, and the like.

For example, when the measured distance is the maximum 200 m, the diameter of the linear-reflecting unit 85 is set to 35 mm and the diameter of the reference-reflecting unit 84 is set to 100 mm, and the thickness of the reference-reflecting unit 84 is set to 30 mm. However the diameter of the linear-reflecting unit 85, the diameter of the reference-reflecting unit 84 and the thickness of the reference-reflecting unit 84 are not limited to the above values.

A frame unit 11 is disposed on the installation base 4 so as to be rotatable in the horizontal direction. A horizontal rotary shaft 12 protrudes from the lower surface of the frame unit 11. The horizontal rotary shaft 12 is rotatably engaged with the installation base 4 via a bearing (not illustrated). The frame unit 11 is rotatable in the horizontal direction with the horizontal rotary shaft 12 as the center.

A horizontal angle detector 13 (e.g. encoder), to detect a horizontal angle (angle in the rotating direction with the horizontal rotary shaft 12 as the center), is disposed between the horizontal rotary shaft 12 and the installation base 4. The horizontal angle detector 13 detects the relative rotation angle of the frame unit 11 in the horizontal direction with respect to the installation base 4.

A horizontal rotary gear 14 is fixed to the installation base 4 so as to be coaxial with the horizontal rotary shaft 12, and a horizontal pinion gear 15 is engaged with the horizontal rotary gear 14. In the frame unit 11, a horizontal motor 16 is disposed, where the output shaft of the horizontal motor 16 protrudes downward, and the horizontal pinion gear 15 is fixed to the output shaft of the horizontal motor 16.

When the horizontal motor 16 is driven, the horizontal pinion gear 15 rotates, and the horizontal pinion gear 15 revolves around the horizontal rotary gear 14. Since the frame unit 11 and the surveying device main unit 3 are integrated, the horizontal motor 16 rotates the surveying device main unit 3 in the horizontal direction with the horizontal rotary shaft 12 as the center.

The frame unit 11 is concave-shaped with a recessed portion, and the surveying device main unit 3 is housed in the recessed portion. The surveying device main unit 3 is supported by the frame unit 11 via a vertical rotary shaft 17 which has a horizontal shaft center extending in the horizontal direction, and the surveying device main unit 3 is rotatable in the vertical direction with the vertical rotary shaft 17 as the center.

A vertical rotary gear 18 is fixed to one end of the vertical rotary shaft 17, and a pinion gear 19 is engaged with the vertical rotary gear 18. A vertical motor 21 is disposed in the frame unit 11, and the pinion gear 19 is fixed to an output shaft of the vertical motor 21. When the vertical motor 21 is driven, the surveying device main unit 3 is rotated in the vertical direction via the pinion gear 19, the vertical rotary gear 18 and the vertical rotary shaft 17.

A vertical angle detector 22 (e.g. encoder), to detect a vertical angle (angle in the rotation direction with the vertical rotary shaft 17 as the center), is disposed between the vertical rotary shaft 17 and the frame unit 11. The vertical angle detector 22 detects the relative rotation angle of the surveying device main unit 3 with respect to the frame unit 11 in the vertical direction.

The horizontal motor 16, the vertical motor 21, the horizontal angle detector 13 and the vertical angle detector 22 are electrically connected to an arithmetic control unit 28 (described later), and the horizontal motor 16 and the vertical motor 21 are individually driven and controlled by the arithmetic control unit 28 so as to reach a predetermined rotation amount at a predetermined timing.

The rotation amount of the horizontal motor 16 (horizontal angle of the frame unit 11) is detected by the horizontal angle detector 13. The rotation amount of the vertical motor 21 (vertical angle of the surveying device main unit 3) is detected by the vertical angle detector 22.

Each detection result of the horizontal angle detector 13 and the vertical angle detector 22 is inputted to the arithmetic control unit 28 respectively. The horizontal motor 16 and the vertical motor 21 constitute a rotary driving unit. The horizontal angle detector 13 and the vertical angle detector 22 constitute an angle detector that detects the vertical rotation angle and the horizontal rotation angle (direction angle detector) of the surveying device main unit 3.

A general configuration of the surveying device main unit 3 will be described with reference to FIG. 3.

The surveying device main unit 3 includes: a distance-measuring light-emitting unit 25, a light-receiving unit 26, a distance-measuring arithmetic unit 27, the arithmetic control unit 28, a storage unit 29, an imaging control unit 31, an image processing unit 32, a communication unit 33, an optical axis-deflecting unit 35, an orientation detector 36, a measurement direction-imaging unit 37, an emitting direction-detecting unit 38 and a motor driver 39. These composing elements are housed in a housing 41 and integrated. The distance-measuring light-emitting unit 25, the light-receiving unit 26, the distance-measuring arithmetic unit 27, the optical axis-deflecting unit 35, and the like constitute a distance-measuring unit 42, which functions as a light wave distance meter.

The distance-measuring light-emitting unit 25 includes an emitting optical axis 44, and a light-emitting element 45 (e.g. laser diode (LD)) is disposed on the emitting optical axis 44. Further, a light-projecting lens 46 is disposed on the emitting optical axis 44. Furthermore, a first-reflecting mirror 47 (deflecting optical member) is disposed on the emitting optical axis 44. A second-reflecting mirror 48 (deflecting optical member) is disposed at a position where the emitting optical axis 44, which is deflected by the first-reflecting mirror 47, intersects with a light-receiving optical axis 51 (described later). The emitting optical axis 44 is deflected by the second-reflecting mirror 48 so as to match with the light-receiving optical axis 51. The first-reflecting mirror 47 and the second-reflecting mirror 48 constitute an emitting optical axis-deflecting unit.

For the distance-measuring arithmetic unit 27, a CPU customized for this apparatus, a general purpose CPU, or the like is used. The distance-measuring arithmetic unit 27 drives the light-emitting element 45, and the light-emitting element 45 emits a laser beam. As the distance-measuring light 49, the distance-measuring light-emitting unit 25 emits the laser beam emitted from the light-emitting element 45. For the laser beam, any one of a continuous light, a pulsed light and an intermittent modulated light (burst light) may be used.

The light-receiving unit 26 will be described. The light-receiving unit 26 includes an optical system and a light-receiving element to receive a reflected distance-measuring light 52 from the measurement target (reference-reflecting unit 84 and linear-reflecting unit 85). The light-receiving unit 26 includes the light-receiving optical axis 51, and the emitting optical axis 44, which is deflected by the first-reflecting mirror 47 and the second-reflecting mirror 48, matches with the light-receiving optical axis 51. A distance-measuring optical axis 53 is the state where the emitting optical axis 44 and the light-receiving optical axis 51 are matched.

The optical axis-deflecting unit 35 is disposed on the reference optical axis O. The optical axis-deflecting unit 35 deflects the laser beam transmitting through the optical axis-deflecting unit 35 by the optical function of the prism (described later). The straight optical axis that passes through the center of the optical axis-deflecting unit 35 is the reference optical axis O. The reference optical axis O matches with the emitting optical axis 44 not deflected by the optical axis-deflecting unit 35, the light-receiving optical axis 51 or the distance-measuring optical axis 53.

The reflected distance-measuring light 52 transmits through the optical axis-deflecting unit 35, and enters the light-receiving unit 26. An image-forming lens 54 is disposed on the light-receiving optical axis 51, and the light-receiving element 55, such as a photodiode (PD) or avalanche photodiode (APD), is disposed on the light-receiving optical axis 51.

The image-forming lens 54 forms an image of the reflected distance-measuring light 52 on the light-receiving element 55. The light-receiving element 55 receives the reflected distance-measuring light 52 and generates the light-receiving signal. The light-receiving signal is inputted to the distance-measuring arithmetic unit 27, then the distance-measuring arithmetic unit 27 calculates the turnaround time of the distance-measuring light based on the light-receiving signal, and measures the distances to the measurement target (reference-reflecting unit 84 and linear-reflecting unit 85) based on the turnaround time and speed of light.

The communication unit 33 sends such data as image data acquired by the measurement direction-imaging unit 37, image data processed by the image processing unit 32, and measured distance data acquired by the distance-measuring unit 42, to the terminal 6, and receives such data as an operation command from the terminal 6.

For the storage unit 29, such a storage medium as an HDD, semiconductor memory and memory card is used. The storage unit 29 stores various programs, including: an imaging control program, an image-processing program, a distance-measuring program, a display program, a communication program, an operation command creation program, an inclination angle arithmetic program for calculating the inclination angle and inclination direction of the surveying device main unit 3 based on the orientation detection result acquired from the orientation detector 36, a measurement program for executing the distance measurement, a deflection control program for controlling the deflection operation of the optical axis-deflecting unit 35, an arithmetic program for executing various arithmetic operations, a searching program for searching a measurement target, and a tracking program for tracking a measurement target.

Further, in the storage unit 29, various data, such as distance measurement data, angle measurement data and image data are also stored.

For the arithmetic control unit 28, a CPU customized for this device, a general purpose CPU, or the like is used. The arithmetic control unit 28 develops and executes various programs in accordance with the operating state of the surveying device main unit 3, so that the surveying device main unit 3 controls the distance-measuring light-emitting unit 25, controls the light-receiving unit 26, controls the distance-measuring arithmetic unit 27, controls the optical axis-deflecting unit 35, and controls the measurement direction-imaging unit 37, and executes the searching, tracking and distance measurement for a measurement target.

The optical axis-deflecting unit 35 will be described with reference to FIG. 3.

The optical axis-deflecting unit 35 is constituted of a pair of optical prisms 57 and 58. The optical prisms 57 and 58 are disks having a same diameter, and are disposed concentrically on the distance-measuring optical axis 53 deflected by the second-reflecting mirror 48 (reference optical axis O), so as to intersect orthogonally with the distance-measuring optical axis 53, and are disposed parallel with each other at a predetermined distance.

Each of the optical prisms 57 and 58 is constituted of three triangular prisms respectively which are disposed parallel to each other. Each triangular prism is molded with optical glass, and has an optical characteristic of an identical deflection angle.

The width and shape of each triangular prism may be the same as or different from those of the other triangular prisms. The width of the triangular prism located at the center is larger than the beam diameter of the distance-measuring light 49, so that the distance-measuring light 49 transmits through only the triangular prism at the center. The triangular prisms at the edges may be constituted of many small triangular prisms.

Further, the triangular prism at the center may be made of optical glass, and the triangular prisms at the edges may be made of optical plastic. This is because the distance from the optical axis-deflecting unit 35 to the measurement target is long, and accuracy is demanded for the optical characteristics of the triangular prism at the center, while the distances from the triangular prisms at the edges to the light-receiving element 55 are short, and highly accurate optical characteristics are not demanded.

The center portion of the optical axis-deflecting unit 35 is a distance-measuring light-deflecting portion, which is the first optical axis-deflecting portion where the distance-measuring light 49 transmits through and is emitted. The portions of the optical axis-deflecting unit 35 excluding the center portion (triangular prisms at the edges) are the reflected distance-measuring light-deflecting portions, which is a second optical axis-deflecting portion where the reflected distance-measuring light 52 transmits through and enters the light-receiving unit 26.

The optical prisms 57 and 58 are disposed independently with the reference optical axis O as the center respectively so as to be rotatable individually. Since the rotation direction, rotation amount and rotation speed are independently controlled, the optical prisms 57 and 58 deflect the emitting optical axis 44 of the emitted distance-measuring light 49 in an arbitrary direction, and deflect the light-receiving optical axis 51 of the received reflected distance-measuring light 52 to be parallel with the emitting optical axis 44.

If each rotation of the optical prisms 57 and 58 is continuously controlled and the distance-measuring light 49 to be transmitted is continuously deflected while continuously emitting the distance-measuring light 49, a predetermined pattern can be scanned with the distance-measuring light 49. Furthermore, the distance measurement data can be acquired along the scanning path (scanning locus).

The external shape of each of the optical prisms 57 and 58 is circular with the distance-measuring optical axis 53 (reference optical axis O) as the center, and the diameters of the optical prisms 57 and 58 are set considering the spread of the reflected distance-measuring light 52, so as to acquire a sufficient quantity of light.

A ring gear 59 is fitted around the outer periphery of the optical prism 57, and a ring gear 60 is fitted around the outer periphery of the optical prism 58.

A driving gear 61 is engaged with the ring gear 59, and the optical prism 57 is rotated by a motor 63 via the driving gear 61 and the ring gear 59. In the same manner, a driving gear 62 is engaged with the ring gear 60, and the optical prism 58 is rotated by a motor 64 via the driving gear 62 and the ring gear 60. The motors 63 and 64 are electrically connected to the motor driver 39.

For the motors 63 and 64, a motor that can detect a rotation angle or a motor that rotates corresponding to a driving input value is used, and is a pulse motor, for example. The rotation amount of each of the motors 63 and 64 may be detected using a rotation angle detector that detects a rotation amount (rotation angle) of the motor, such as an encoder. The rotation amount is detected for the motor 63 and the motor 64 respectively, whereby the motor 63 and the motor 64 are individually controlled by the motor driver 39.

The rotation angles of the optical prisms 57 and 58 are detected via the rotation amounts of the motors 63 and 64, that is, the rotation amounts of the driving gears 61 and 62. An encoder may be installed directly on the ring gears 59 and 60 respectively, and the rotation angles of the ring gears 59 and 60 may be directly detected by the encoders.

The driving gears 61 and 62 and the motors 63 and 64 are disposed at positions which do not interfere with the distance-measuring light-emitting unit 25, such as at the lower side of the ring gears 59 and 60.

The light-projecting lens 46, the first-reflecting mirror 47, the second-reflecting mirror 48, the distance-measuring light-deflecting unit, and the like constitute a light-projecting optical system. The reflected distance-measuring light-deflecting unit, the image-forming lens 54 and the like constitute the light-receiving optical system.

The distance-measuring arithmetic unit 27 controls the light-emitting element 45, and generates the distance-measuring light 49 by performing pulsed emission or burst emission (intermittent emission) of a laser beam. The emitting optical axis 44 (distance-measuring optical axis 53) is deflected by the triangular prism at the center (distance-measuring light-deflecting portion) so that the distance-measuring light 49 is directed to the measurement target. The distance is measured in a state where the distance-measuring optical axis 53 is collimated to the measurement target.

The reflected distance-measuring light 52 reflected from the measurement target enters the light-receiving unit 26 via the triangular prisms at the edges (reflected distance-measuring light-deflecting portions), and the reflected distance-measuring light 52 forms an image on the light-receiving element 55 via the image-forming lens 54.

The light-receiving element 55 sends a light-receiving signal to the distance-measuring arithmetic unit 27, and based on the light-receiving signal from the light-receiving element 55, the distance-measuring arithmetic unit 27 measures the distance of a measurement point (point to which the distance-measuring-light is emitted) for each pulsed light, and the distance measurement data is stored in the storage unit 29.

The emitting direction-detecting unit 38 detects the rotation angles of the motors 63 and 64 by counting the driving pulse input to the motors 63 and 64, or detects the rotation angles of the motors 63 and 64 based on the signals from the encoders. The emitting direction-detecting unit 38 also calculates the rotating positions of the optical prisms 57 and 58 based on the rotation angles of the motors 63 and 64.

Furthermore, the emitting direction-detecting unit 38 calculates, in real-time, the deflection angle and emitting direction of the distance-measuring light 49 with respect to the reference optical axis O for each pulsed light, based on the reflectances of the optical prisms 57 and 58, a rotation position of the optical prisms 57 and 58 as an integrated unit, and a relative rotation angle between the optical prisms 57 and 58. The calculated result (angle measurement result) is linked with the distance measurement result, and is inputted to the arithmetic control unit 28 in this state. In a case where the distance-measuring light 49 is burst-emitted, the distance measurement is executed for each intermittent distance-measuring light.

The arithmetic control unit 28 controls the rotation direction and rotation speed of the motors 63 and 64 and the rotation ratio between the motors 63 and 64, whereby the relative rotations and general rotations of the optical prisms 57 and 58 are controlled, and the deflecting function by the optical axis-deflecting unit 35 is controlled. The arithmetic control unit 28 also calculates the horizontal angle and the vertical angle of the measurement point with respect to the reference optical axis O, based on the deflection angle and emitting direction of the distance-measuring light 49. Furthermore, the arithmetic control unit 28 links the horizontal angle and the vertical angle of the measurement point to the distance measurement data, whereby the three-dimensional data of the measurement point can be determined. In this way, the surveying device main unit 3 functions as a total station.

The orientation detector 36 will be described next. The orientation detector 36 detects an inclination angle of the surveying device main unit 3 from the horizontal line or the vertical line, and the detection result is inputted to the arithmetic control unit 28. For the orientation detector 36, a known orientation detector can be used.

The orientation detector 36 will be described in brief. The orientation detector 36 includes a frame 66. The frame 66 is fixed to the housing 41, or is fixed to a structure member, and integrated with the surveying device main unit 3.

A sensor block 67 is installed in the frame 66 via a gimbal. The sensor block 67 is rotatable 360° or more in two directions respectively, around the two axes that intersect orthogonally with each other.

A first inclination sensor 68 and a second inclination sensor 69 are installed in the sensor block 67. The first inclination sensor 68 is for accurately detecting a horizontal line, and is, for example, an inclination detector that projects a detecting light toward the horizontal liquid level, and detects the horizontal line by the change of the reflection angle of the reflected light, or is a bubble tube that detects an inclination by the positional change of a bubble contained therein. The second inclination sensor 69 is for detecting the change of inclination with a high-speed response, and is an acceleration sensor, for example.

The relative rotation angles of the sensor block 67, with respect to the frame 66 for the two axes, are detected by encoders 70 and 71 respectively.

A motor (not illustrated) that rotates the sensor block 67 and maintains the sensor block 67 to be horizontal is disposed for the two axes respectively. The motor is controlled by the arithmetic control unit 28 based on the detection results from the first inclination sensor 68 and the second inclination sensor 69, so as to maintain the sensor block 67 to be horizontal.

In a case where the sensor block 67 is inclined (in a case where the surveying device main unit 3 is inclined), the relative rotation angle of the frame 66, with respect to the sensor block 67 (horizontal) in each axis direction, is detected by the encoders 70 and 71 respectively. Based on the detection results by the encoders 70 and 71, the inclination angles of the two axes of the surveying device main unit 3 are detected, and the inclination direction is detected by combining the inclinations of the two axes.

The sensor block 67 is rotatable 360° or more for the two axes, hence regardless what the orientation of the orientation detector 36, even if the orientation detector 36 is upside down, the orientation of the sensor block 67 (inclination angle from horizontal line, inclination direction) can be detected in all directions.

In the orientation detection, the orientation detection and the orientation control are performed based on the detection result by the second inclination sensor 69 if a high-speed response is demanded, but the detection accuracy of the second inclination sensor 69 is normally not as accurate as the first inclination sensor 68.

The orientation detector 36 includes the first inclination sensor 68 which has high accuracy, and the second inclination sensor 69 which has a high-speed response, hence the orientation control can be performed based on the detection result by the second inclination sensor 69, and the orientation detection can be accurately performed using the first inclination sensor 68.

Based on the detection result by the first inclination sensor 68, the detection result of the second inclination sensor 69 can be calibrated. In other words, if the relationship between the inclination angle detected by the second inclination sensor 69 and the inclination angle determined based on the horizontal line detected by the first inclination sensor 68 and the detection results by the encoders 70 and 71 is acquired in advance, the inclination angle detected by the second inclination sensor 69 can be calibrated, and the accuracy of the orientation detection by the second inclination sensor 69 at a high-speed response can be improved. In a state where environmental change (e.g. temperature change) is minor, the inclination may be detected based on the detection result by the second inclination sensor 69 and the correction value.

In a case where the inclination changes considerably, or the changes of the inclination are fast, the arithmetic control unit 28 controls the motors based on the signals from the second inclination sensor 69. In a case where the inclination does not change very much, or changes of the inclination are slow, that is, in a case where the first inclination sensor 68 can track the changes, the arithmetic control unit 28 controls the motor based on the signals from the first inclination sensor 68. If the inclination angle detected by the second inclination sensor 69 is constantly calibrated, the orientation detector 36 may detect the orientation based on the detection result by the second inclination sensor 69.

In the storage unit 29, the comparison data, that indicates the comparison result between the detection result by the first inclination sensor 68 and the detection result by the second inclination sensor 69, is stored. The detection result by the second inclination sensor 69 is calibrated based on the signal from the first inclination sensor 68. By this calibration, the detection result by the second inclination sensor 69 can be improved to the level of the detection accuracy of the first inclination sensor 68. As a consequence, in the orientation detection by the orientation detector 36, a high-speed response can be implemented while maintaining high accuracy.

The orientation detector 36 detects the orientation of the surveying device main unit 3 in real-time. Since the orientation of the surveying device main unit 3 can be detected in real-time, the measured values can be corrected based on the result detected by the orientation detector 36. This means that collation, that is performed when the surveying device main unit 3 is installed, is unnecessary.

The measurement direction-imaging unit 37 includes a first-imaging optical axis 73 which has a predetermined relationship with the reference optical axis O of the surveying device main unit 3, and an imaging lens 74 and an image pickup element 75 which are disposed on the first-imaging optical axis 73. The measurement direction-imaging unit 37 is a camera that has an angle of view that is approximately the same as the maximum deflection angle θ/2 (e.g. ±30°) caused by the optical prisms 57 and 58, and this angle of view is 50° to 60°, for example. The measurement direction-imaging unit 37 can capture still images, sequential images and moving images.

The relationship of the first-imaging optical axis 73, an emitting optical axis 44 and the reference optical axis O is known. The first-imaging optical axis 73, the emitting optical axis 44 and the reference optical axis O are parallel, and the distance between each optical axis is a known value.

The imaging control unit 31 controls the imaging by the measurement direction-imaging unit 37. In a case where the measurement direction-imaging unit 37 captures a moving image or sequential images, the imaging control unit 31 synchronizes a timing of acquiring frame images constituting the moving images or sequential images, and a timing of scanning and measuring distance by the surveying device main unit 3. The arithmetic control unit 28 links each image and measurement data (distance measurement data, angle measurement data).

The image pickup element 75 of the measurement direction-imaging unit 37 is a CCD or a CMOS sensor that is a collection of pixels, and a position of each pixel can be specified on the image element. For example, each pixel has pixel coordinates on a coordinate system of which origin is on the first-imaging optical axis 73, and the position on the image element is specified by the pixel coordinates. Since the relationship between the first-imaging optical axis 73 and the reference optical axis O is known, the measurement position by the distance-measuring unit 42 and the position on the image pickup element 75 can be associated with each other. The image signal outputted from the image pickup element 75 includes information on the pixel coordinates. The pixel signal is inputted to the image processing unit 32 via the imaging control unit 31

The deflecting function and the scanning function of the optical axis-deflecting unit 35 will be described with reference to FIGS. 3 to 6.

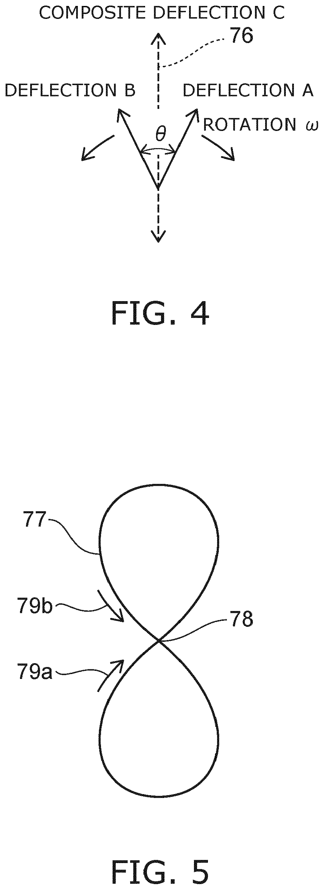

FIG. 4 is a schematic diagram for describing the function of the optical axis-deflecting unit of the present embodiment.

FIG. 5 is a schematic diagram indicating an example of a scanning pattern.

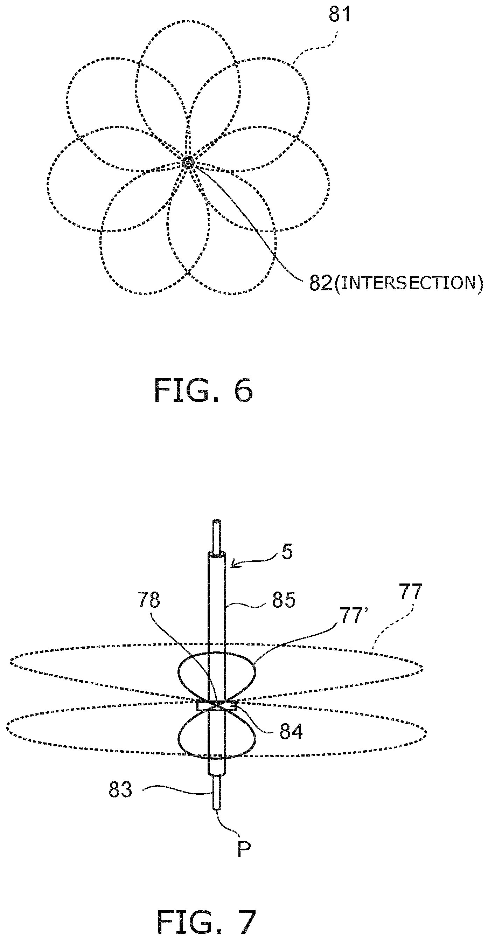

FIG. 6 is a schematic diagram indicating another example of a scanning pattern.

In the state of the optical prisms 57 and 58 illustrated in FIG. 3 (state where the directions of the optical prisms 57 and 58 are different by 180° (relative rotation angle is 180°)), the optical functions of the optical prisms 57 and 58 cancel each other, and the deflection angle becomes 0°. Therefore the optical axis (distance-measuring optical axis 53) of the laser beam that is emitted and received via the optical prisms 57 and 58 matches with the reference optical axis O.

In a state where one of the optical prisms 57 and 58 in the state in FIG. 3 is rotated from the other by 180° (directions of the prisms are the same), the maximum deflection angle (e.g. 30°) is acquired.

Therefore in the relative rotation between the optical prisms 57 and 58, the distance-measuring optical axis 53 is deflected in the 0° to 30° range, and the deflecting direction is deflected by the integral rotation of the optical prisms 57 and 58.

This means that by controlling the relative rotation angles between the optical prisms 57 and 58 and the integral rotation angle of the optical prisms 57 and 58, the distance-measuring optical axis 53 can be deflected in any arbitrary direction. In other words, the distance-measuring optical axis 53 can be collimated to a measurement target in an arbitrary direction.

Further, scanning can be performed with the distance-measuring light 49 in an arbitrary direction and in an arbitrary pattern by rotating the optical prisms 57 and 58 relatively or integrally while emitting the distance-measuring light 49.

As illustrated in FIG. 4, for example, if it is assumed that the relative rotation angle between the optical prisms 57 and 58 is θ, and the distance-measuring optical axis 53 is deflected to deflection A and deflection B by the optical prisms 57 and 58 respectively, then the actual deflection 76 is the composite deflection C, and the value of the deflection angle is determined by the relative rotation angle θ. Therefore if the optical prisms 57 and 58 are rotated synchronously in the forward and backward directions at a same speed, the distance-measuring optical axis 53 (distance-measuring light 49) is linearly scanned back and forth in the direction of the composite deflection C.

Further, by individually controlling the rotation direction, rotation speed and rotation speed ratio of the optical prism 57 and the optical prism 58, various two-dimensional scanning patterns of the scanning locus of the distance-measuring light 49 can be acquired with the reference optical axis O as the center.

For example, if the rotation ratio of the optical prism 57 and the optical prism 58 is set to 1:2, an 8-shaped two-dimensional closed loop scanning pattern 77, as illustrated in FIG. 5, is acquired. The scanning pattern 77 includes an intersection 78 at which an outward passage 79a and a return passage 79b intersect, and the intersection 78 is the center of the scanning pattern 77, and matches with the reference optical axis O.

Further, if one optical prism 57 is rotated twenty five times and the other optical prism 58 is rotated five times in the opposite direction, a petal-like two-dimensional closed loop scanning pattern 81 (petal pattern 81 (hypotrochoid curve)), as illustrated in FIG. 6, is acquired. The petal pattern 81 also has an intersection 82 at the center.

The maximum range in which the two-dimensional scanning can be performed in a state where the surveying device main unit 3 is fixed is the range of the maximum deflection angle of the optical axis-deflecting unit 35.

The measurement function of the surveying system 1 according to the present embodiment will be described next.

FIG. 7 is a schematic diagram for describing a relationship between the scanning pattern and the target device.

As a preparation for starting the measurement, the measurement direction-imaging unit 37 captures the target device 5. The angle-of-view of the measurement direction-imaging unit 37 is a wide angle (50° to 60°), hence it is sufficient if the surveying device main unit 3 is approximately directed to the target device 5. The maximum deflection angle of the optical axis-deflecting unit 35 is the same as or approximately the same as the angle-of-view of the measurement direction-imaging unit 37, hence the measurement direction-imaging unit 37 capturing the target device 5 means that the surveying device main unit 3 is capturing the target device 5 in a searchable range.

In the state where the measurement direction-imaging unit 37 is capturing the target device 5, the surveying device main unit 3 executes a search and collation of the measurement target. At this time, the surveying device main unit 3 is in a fixed state.

The two-dimensional search scanning is executed based on the control of the optical axis-deflecting unit 35, and in the two-dimensional search scanning according to the present embodiment, an initial search scanning, of which search range is wide, and a local search scanning, of which the search range is limited to a narrow range that includes the measurement target, are executed. However, all that is required is executing the two-dimensional search scanning, and it is not always necessary to execute both the initial search scanning and the local search scanning. In the present embodiment, a case of executing both the initial search scanning and the local search scanning will be described as an example.

In the following description, the 8-shaped scanning pattern 77 (see FIG. 5) is used for the pattern of the search scanning. However, the above mentioned petal-shaped scanning pattern 81 (see FIG. 6) may be used instead, for the pattern of the search scanning.

First, the initial search scanning is executed to detect the target device 5. The shape of the scanning pattern 77 in the initial search scanning at the beginning of the search is horizontally flat 8-shaped, as indicated in FIG. 7. In this case, a rotation speed of the 8-shaped scanning pattern 77, that is, the speed of one cycle, is about 10 Hz to 60 Hz, for example. This range of the rotation speed is also the same in the later mentioned local-scanning pattern 77'.

The linear-reflecting unit 85 is long in the vertical direction, hence high-speed search in a wide range becomes possible if the scanning pattern 77 is flat. As long as the path of the scanning pattern 77 in the initial search scanning intersects with the linear-reflecting unit 85, the reflected distance-measuring light 52 from the linear-reflecting unit 85 can be acquired, hence it is not necessary to perform the scanning completely throughout the search range, but it is sufficient to continuously perform scanning in the same scanning pattern, as illustrated in FIG. 7.

The arithmetic control unit 28 executes the initial search scanning by controlling the optical axis-deflecting unit 35, but also executes the distance measurement and the angle measurement along with the execution of the scanning pattern 77, hence based on the reflected distance-measuring light 52 from the linear-reflecting unit 85, the deflecting direction when the scanning pattern crosses the linear-reflecting unit 85 is detected, and the distance to the linear-reflecting unit 85 is measured. As a consequence, the three-dimensional coordinates of a point where the scanning pattern crosses the linear-reflecting unit 85 are determined.

Furthermore, the arithmetic control unit 28 calculates the horizontal deflection angle and the deflecting direction of the point where the scanning pattern crosses the linear-reflecting unit 85 (hereafter "cross point") with respect to the reference optical axis O. When the horizontal angle between the cross point and the center of the scanning pattern (intersection 78 in FIG. 7) is determined, the arithmetic control unit 28 controls the optical axis-deflecting unit 35 so that the scanning pattern 77 moves in a direction where the horizontal angle decreases.

In a case where a plurality of reflected distance-measuring lights 52 are acquired from the target device 5, each distance is measured based on the light-receiving signal acquired from each reflected distance-measuring light 52, the acquired distance-measuring results are averaged, and the optical axis-deflecting unit 35 is controlled based on this average value.

Parallel with moving the scanning pattern 77 in the horizontal direction, moving the scanning pattern 77 in the vertical direction is also executed, so that the reference-reflecting unit 84 is detected by the scanning pattern 77. Whether the scanning pattern 77 is moved downward or upward is determined by detecting the position of the scanning pattern 77 that crossed the linear-reflecting unit 85.

The arithmetic control unit 28 moves the intersection 78 along the linear-reflecting unit 85 until the reference-reflecting unit 84 is detected by the scanning pattern 77. Here the reference-reflecting unit 84 protrudes from the linear-reflecting unit 85 in the diameter direction, hence the reference-reflecting unit 84 can be detected based on the change of the distance-measuring result. FIG. 7 indicates a state where the arithmetic control unit 28 detected the reference-reflecting unit 84 using the scanning pattern 77.

When the reference-reflecting unit 84 is detected using the scanning pattern 77, the scanning pattern 77 is changed to the local-scanning pattern 77', which is suitable for detecting the center position of the reference-reflecting unit 84. The local-scanning pattern 77' has a narrow search range, and is long in the vertical direction.

When the intersection 78 of the local-scanning pattern 77' comes near the center of the reference-reflecting unit 84, the local-scanning pattern 77' passes through the edge of the reference-reflecting unit 84. By the result of measuring the passing point of the edge, the position of the intersection 78 with respect to the reference-reflecting unit 84 can be measured, and the intersection 78 can be matched with the center of the reference-reflecting unit 84.

When the intersection 78 matches with the center of the reference-reflecting unit 84, the distance-measuring optical axis 53 is collimated to the center of the reference-reflecting unit 84, and measurement of the reference-reflecting unit 84 is executed. Further, the three-dimensional coordinates of the measurement point P are calculated based on the relationship between the reference-reflecting unit 84 and the lower end of the pole 83.

Further, in the execution of the local-scanning pattern 77', the three-dimensional coordinates of the upper and lower measurement points, when the local-scanning pattern 77' crossed the linear-reflecting unit 85, are measured. By the three-dimensional coordinates of the upper and lower measurement points, the inclined directions and the inclined angle of the pole 83 can be measured in the front-back direction and in the left-right direction. Further, based on the inclination direction and the inclination angle of the pole 83 and the relationship between the reference-reflecting unit 84 and the lower end of the pole 83, the measurement result of the measurement point P can be corrected.

Furthermore, the inclination of the pole 83 acquired here is the inclination of the pole 83 with respect to the distance-measuring optical axis 53, and the distance-measuring optical axis 53 itself is not always horizontal. The inclination angle and the inclination direction of the distance-measuring optical axis 53, with respect to the reference optical axis O can be measured by the emitting direction-detecting unit 38. The inclination angle and the inclination direction of the reference optical axis O with respect to the horizontal line, on the other hand, can be measured by the orientation detector 36.

Therefore the inclination angle and the inclination direction of the pole 83 with respect to the horizontal or vertical line can also be measured. By correcting the measurement result based on the inclination angle and the inclination direction of the pole 83 with respect to the horizontal and vertical lines, the distance, vertical angle and horizontal angle can be accurately measured for the measurement point (point indicated by the lower end of the pole 83) P regardless the inclination of the pole 83.

Therefore even in the case of the measurement at a place where the target device 5 cannot be supported vertically, such as the case of the corner of a wall or the corner of a ceiling, accurate measurement can be executed only if the measurement point can be indicated by the lower end of the pole 83 (upper end in the case of measuring a ceiling).

When the measurement of the measurement point P ends, the target device 5 is moved to a measurement point to be measured next.

In the case of moving the target device 5 to the next measurement point, the surveying device main unit 3 executes the local scanning continuously using the local-scanning pattern 77' even while the target device 5 is moving, and executes tracking of the reference-reflecting unit 84.

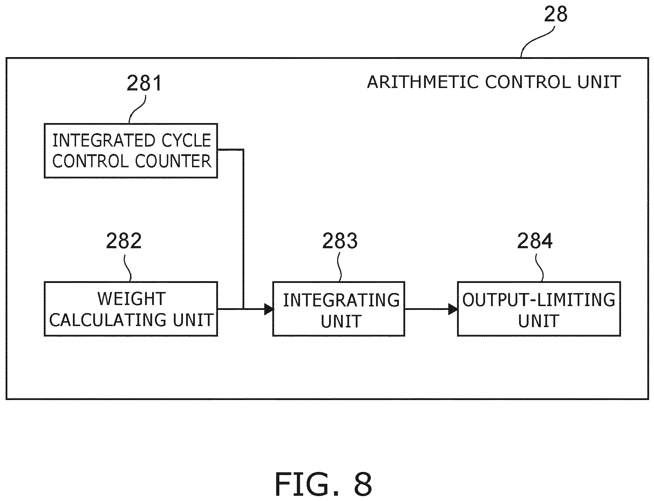

Tracking of the reference-reflecting unit 84 will be described in detail with reference to FIGS. 8, 9A to 9C, 10A to 10C, 11A to 11C, and 12A to 12C.

FIG. 8 is a block diagram depicting a general configuration of the arithmetic control unit of the present embodiment.

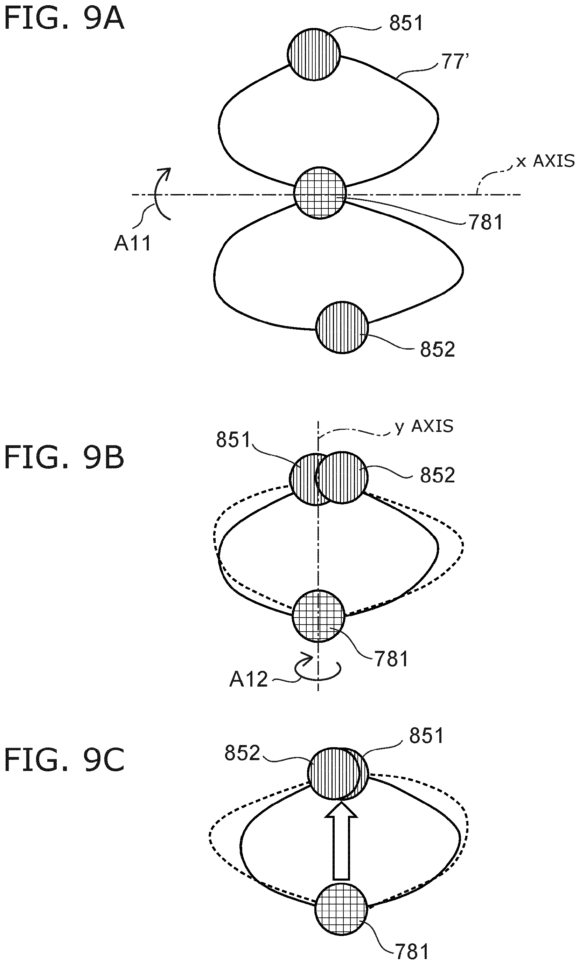

FIGS. 9A to 9C are schematic diagrams depicting a first example of reversing and inverting the intensity distribution of the light-receiving signal from the light-receiving element.

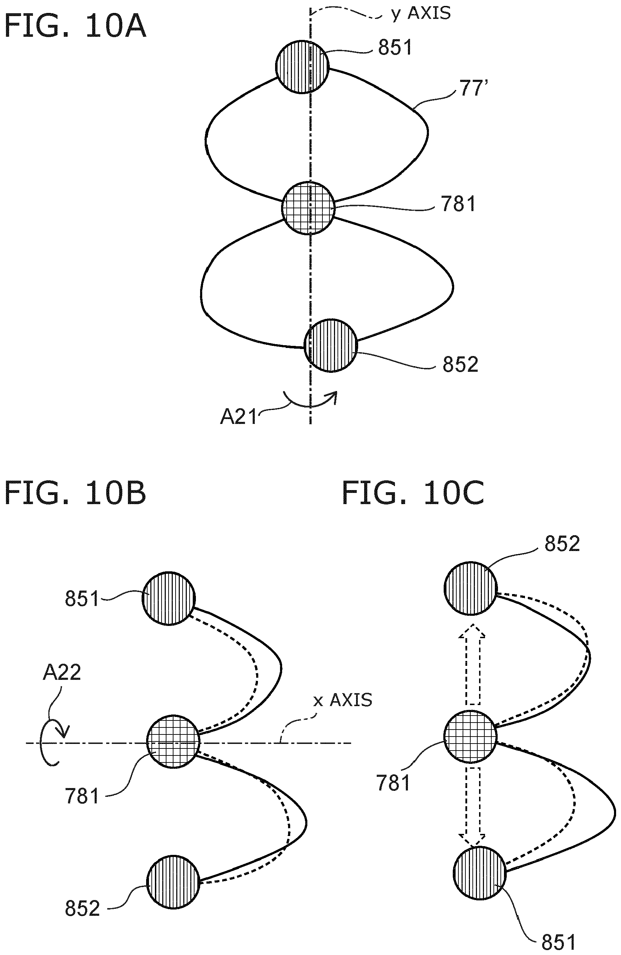

FIGS. 10A to 10C are schematic diagrams depicting a second example of reversing and inverting the intensity distribution of the light-receiving signal from the light-receiving element.

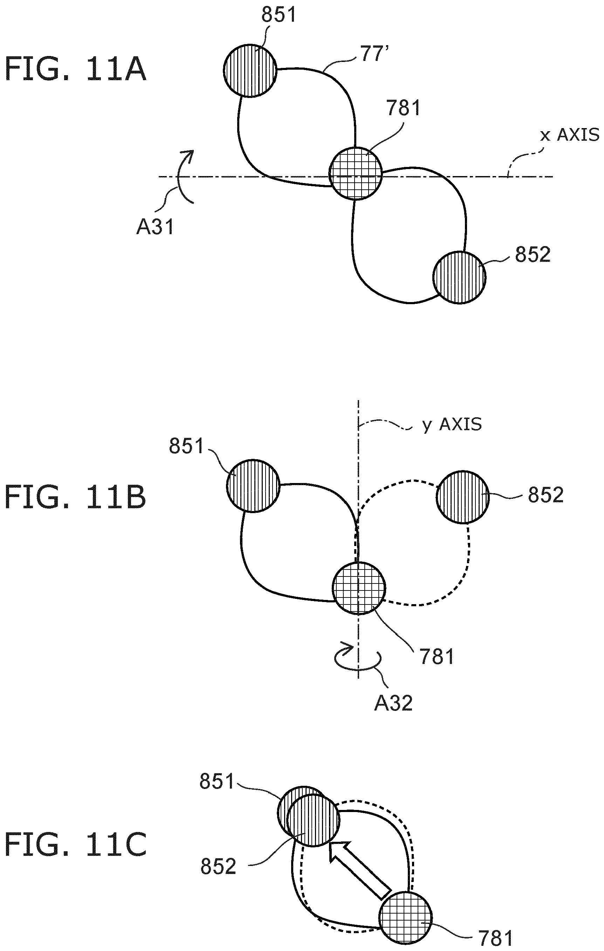

FIGS. 11A to 11C are schematic diagrams depicting a third example of reversing and inverting the intensity distribution of the light-receiving signal from the light-receiving element.

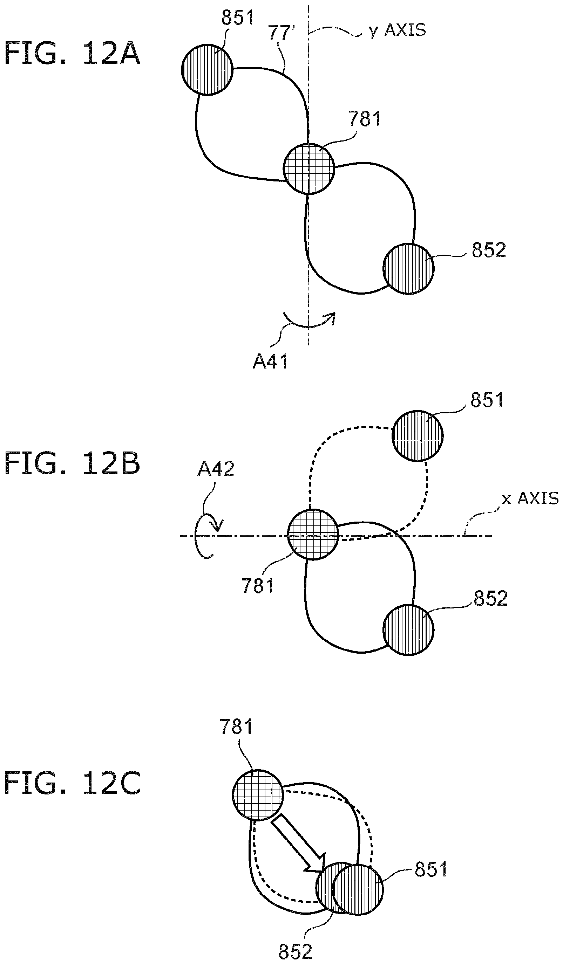

FIGS. 12A to 12C are schematic diagrams depicting a fourth example of reversing and inverting the intensity distribution of the light-receiving signal from the light-receiving element.

As indicated in FIG. 8, the arithmetic control unit 28 of the present embodiment includes an integrated cycle control counter 281, a weight-calculating unit 282, an integrating unit 283, and an output-limiting unit 284. The arithmetic control unit 28 updates the three-dimensional data of the measurement target (reference-reflecting unit 84 and linear-reflecting unit 85) based on the detection result by the emitting direction-detecting unit 38 (deflection angle data) and the detection result by the distance-measuring unit 42 (distance measurement data), each time the light-receiving signal from the light-receiving element 55 is detected during executing the local-scanning pattern 77'. A specific example of the tracking function of the surveying system 1 will be described below.

The integrated cycle control counter 281 sets a number of data that can be acquired in one cycle of the scanning pattern 77' (cumulative number) based on the light-emitting rate (Hz) of the light-emitting element 45 and the rotation speed (Hz) of the scanning pattern 77'. The integrated cycle control counter 281 also increments the address of the storage unit 29 in accordance with the cumulative number.

The weight-calculating unit 282 generates weights for detecting the reference point and for detecting the rotation angle of the measurement target in accordance with the distance from the intersection 78 each time the three-dimensional data is updated. Specifically, each time the three-dimensional data is updated, the weight-calculating unit 282 generates the weight for detecting the reference point of the measurement target such that the value increases as the distance of the scanning pattern 77' from the intersection 78 decreases. Further, each time the three-dimensional data is updated, the weight-calculating unit 282 generates the weight for detecting the rotation angle of the measurement target such that the value increases as the distance of the scanning pattern 77' from the intersection 78 increases.

For detecting the rotation angle of the measurement target, the weight-calculating unit 282 also generates the correction data by reversing and inverting the intensity distribution of the light-receiving signal from the light-receiving element 55 at the orthogonal coordinate axes in the scanning pattern 77'.

Specifically, the measurement target includes a rod-shaped linear-reflecting unit 85 which has a predetermined length in the vertical direction, hence the portions 851 and 852, where the intensity of the light-receiving signal is strong, appear approximately vertical, as indicated in FIGS. 9A, 10A, 11A and 12A. The portions 851 and 852 where the intensity of the light-receiving signal is strong are portions where the reflection intensity is strong when the local-scanning pattern 77' crosses the linear-reflecting unit 85. Further, the measurement target includes a reference-reflecting unit 84 disposed at the approximate center of the linear-reflecting unit 85, hence a portion 781 where the intensity of the light-receiving signal is strong appears between the upper portion 851 and the lower portion 852. The portion 781 where the intensity of the light-receiving signal is strong is a portion where the reflection intensity is strong when the local-scanning pattern 77' crosses the reference-reflecting unit 84.

Thus in FIGS. 9A to 9C, 10A to 10C, 11A to 11C, and 12A to 12C, the intensity of the light-receiving signal from the light-receiving element 55 is indicated by a diameter (bubble) of a circle. Therefore the portion indicated by a solid line, other than the portions 781, 851 and 852, where the intensity of the light-receiving signal is strong, is a portion where the intensity of the light-receiving signal is weaker than the portions 781, 851 and 852.

As mentioned above, the weight-calculating unit 282 generates the weights for detecting the reference point and for detecting the rotation angle of the measurement target in accordance with the distance from the intersection 78, each time the three-dimensional data is updated. Therefore if the integrating unit 283 directly integrates the three-dimensional data of the measurement target, the intensity of the light-receiving signals from the light-receiving element 55 may cancel each other. For example, if the integrating unit 283 directly integrates the three-dimensional data of the measurement target, the upper portion 851 where the intensity of the light-receiving signal is strong and the lower portion 852 where the intensity of the light-receiving signal is strong may in some cases cancel each other.

To prevent this, the weight-calculating unit 282 of the present embodiment generates the correction data by reversing and inverting the intensity distribution of the light-receiving signal from the light-receiving element 55 at the orthogonal coordinate axes in the scanning pattern 77'.

For example, in a case where the intensity distribution of the light-receiving signal from the light-receiving element 55 is the intensity distribution indicated in FIG. 9A, the weight-calculating unit 282 reverse the intensity distribution, which is lower than the x axis of the orthogonal coordinate axes in the scanning pattern 77', at the x axis, as indicated by the arrow mark A11 in FIG. 9A. The x axis of the present embodiment is an example of "a first coordinate axis" of the present invention, and is an axis in the horizontal direction passing through the intersection 78. FIG. 9B indicates the intensity distribution when the weight-calculating unit 282 reversed the intensity distribution, which is lower than the x axis, at the x axis. In FIG. 9B, the intensity distribution reversed at the x axis is indicated by a broken line to make explanation easier.

Then, as the arrow mark A12 in FIG. 9B indicates, the weight-calculating unit 282 inverts only the intensity distribution, which was reversed at the x axis, with the y axis as the center. In the description of the present patent application, "invert" refers to rotating 180° with an arbitrary axis as the center. The y axis of the present embodiment is an example of "a second coordinate axis" of the present invention, and is an axis in the vertical direction passing through the intersection 78. FIG. 9C indicates the intensity distribution when the weight-calculating unit 282 inverted only the intensity distribution, which was reversed at the x axis, with the y axis as the center. In this way, the weight-calculating unit 282 generates a first correction data for detecting the rotation angle of the measurement target. In this case, as the solid line arrow mark in FIG. 9C indicates, the upper portion 851 where the intensity of the light-receiving signal is strong and the lower portion 852 where the intensity of the light-receiving signal is strong do not cancel each other, even if the integrating unit 283 integrates the three-dimensional data of the measurement target. Thereby when the integrating unit 283 integrates the three-dimensional data of the measurement target, the weight-calculating unit 282 can control so that the upper portion 851 where the intensity of the light-receiving signal is strong and the lower portion 852 where the intensity of the light-receiving signal is strong do not cancel each other.

In a case where the intensity distribution of the light-receiving signal from the light-receiving element 55 is the intensity distribution indicated in FIG. 10A, for example, the weight-calculating unit 282 reverses the intensity distribution, which is on the left side of the y axis, at the y axis, as indicated by the arrow mark A21 in FIG. 10A. The intensity distribution indicated in FIG. 10A is the same as the intensity distribution indicated in FIG. 9A. FIG. 10B indicates the intensity distribution when the weight-calculating unit 282 reversed the intensity distribution, which is on the left side of the y axis, at the y axis. In FIG. 10B, the intensity distribution reversed at the y axis is indicated by the broken line to make explanation easier.

Then as the arrow mark A22 in FIG. 10B indicates, the weight-calculating unit 282 inverts only the intensity distribution, which was reversed at the y axis, with the x axis as the center. FIG. 10C indicates the intensity distribution when the weight-calculating unit 282 inverted only the intensity distribution, which was reversed at the y axis, with the x axis as the center. In this way, the weight-calculating unit 282 generates the second correction data for detecting the rotation angle of the measurement target. In this case, as the broken line arrow mark in FIG. 10C indicates, the upper portion 851 where the intensity of the light-receiving signal is strong and the lower portion 852 where the intensity of the light-receiving signal is strong cancel each other, if the integrating unit 283 integrates the three-dimensional data of the measurement target. Therefore in this case, the weight-calculating unit 282 selects the first correction data, out of the first correction data and the second correction data, for detecting the rotation angle of the measurement target.

In a case where the intensity distribution of the light-receiving signal from the light-receiving element 55 is the intensity distribution indicated in FIG. 11A, the weight-calculating unit 282 reverses the intensity distribution, which is on the lower side of the x axis, at the x axis, as indicated by the arrow mark A31 in FIG. 11A. FIG. 11B indicates the intensity distribution when the weight-calculating unit 282 reversed the intensity distribution, which is on the lower side of the x axis, at the x axis. In FIG. 11B, the intensity distribution reversed at the x axis is indicated by the broken line to make explanation easier.

Then as the arrow A32 in FIG. 11B indicates, the weight-calculating unit 282 inverts only the intensity distribution, which was reversed at the x axis, with the y axis as the center. FIG. 11C indicates the intensity distribution when the weight-calculating unit 282 inverted only the intensity distribution, which was reversed at the x axis, with the y axis as the center. In this way, the weight-calculating unit 282 generates a first correction data for detecting the rotation angle of the measurement target. In this case, as the solid line arrow mark in FIG. 11C indicates, the upper portion 851 where the intensity of the light-receiving signal is strong and the lower portion 852 where the intensity of the light-receiving signal is strong do not cancel each other, even if the integrating unit 283 integrates the three-dimensional data of the measurement target. Thereby when the integrating unit 283 integrates the three-dimensional data of the measurement object, the weight-calculating unit 282 can control so that the upper portion 851 where the intensity of the light-receiving signal is strong and the lower portion 852 where the intensity of the light-receiving signal is strong do not cancel each other.

In a case where the intensity distribution of the light-receiving signal from the light-receiving element 55 is the intensity distribution indicated in FIG. 12A, for example, the weight-calculating unit 282 reverses the intensity distribution, which is on the left side of the y axis, at the y axis, as indicated by the arrow mark A41 in FIG. 12A. The intensity distribution indicated in FIG. 12A is the same as the intensity distribution indicated in FIG. 11A. FIG. 12B indicates the intensity distribution when the weight-calculating unit 282 reversed the intensity distribution, which is on the left side of the y axis, at the y axis. In FIG. 12B, the intensity distribution reversed at the y axis is indicated by the broken line to make explanation easier.

Then as the arrow mark A42 in FIG. 12B indicates, the weight-calculating unit 282 inverts only the intensity distribution, which was reversed at the y axis, with the x axis as the center. FIG. 12C indicates the intensity distribution when the weight-calculating unit 282 inverted only the intensity distribution, which was reversed at the y axis, with the x axis as the center. In this way, the weight-calculating unit 282 generates the second correction data for detecting the rotation angle of the measurement target. In this case, as the solid line arrow mark in FIG. 12C indicates, the upper portion 851 where the intensity of the light-receiving signal is strong and the lower portion 852 where the intensity of the light-receiving signal is strong do not cancel each other, even if the integrating unit 283 integrates the three-dimensional data of the measurement target. Thereby when the integrating unit 283 integrates the three-dimensional data of the measurement target, the weight-calculating unit 282 can control so that the upper portion 851 where the intensity of the light-receiving signal is strong and the lower portion 852 where the intensity of the light-receiving signal is strong do not cancel each other. In this case, the weight-calculating unit 282 selects at least one of the first correction data and the second correction data to detect the rotation angle of the measurement target.

The integrating unit 283 calculates the reference point (center of the reference-reflecting unit 84) position and the rotation angle of the measurement target, using the weights for detecting the reference point and for detecting the rotation angle generated by the weight-calculating unit 282. The integrating unit 283 also calculates the rotation angle of the measurement target using the weight for detecting the rotation angle, which was generated in accordance with the distance from the intersection by the weight-calculating unit 282, and at least one of the first correction data and the second correction data (see FIGS. 9A to 9C, 10A to 10C, 11A to 11C, and 12A to 12C) generated by the weight-calculating unit 282.

Each time a light-receiving signal from the light-receiving element 55 is detected during executing the local-scanning pattern 77', that is, each time new three-dimensional data is acquired, the integrating unit 283 deletes the oldest three-dimensional data, integrates the acquired new three-dimensional data, and stores the integrated data in the storage unit 29. Thereby the integrating unit 283 can reduce and simplify the calculation amount and the calculation content required for each measurement point, and decrease the time required for the arithmetic processing. Then the arithmetic control unit 28 executes the tracking of the reference-reflecting unit 84 based on the reference point (center of the reference-reflecting unit 84) position and the rotation angle of the measurement target calculated by the integrating unit 283.

The output-limiting unit 284 limits the change amount if the change amount or the change ratio of the reference point position and the rotation angle of the measurement target calculated by the integrating unit 283 is larger than a predetermined value. For example, in a case where the change amount of the reference point position of the measurement target calculated by the integrating unit 283 is larger than a predetermined change amount, the output-limiting unit 284 limits the moving range in the scanning area. Further, in a case where the change ratio of the rotation angle is larger than a predetermine value, or in a case where the difference between the weight of the reference point of the measurement target and the weight of an outer peripheral point of the measurement target is larger than a predetermined value, the output-limiting unit 284 determines that the target device 5 is not within the outer peripheral portion of the scanning pattern 77'. In this case, the surveying device main unit 3 executes the above mentioned search. By executing this control of limiting the output, the output-limiting unit 284 can prevent performing unnecessary control on the motors 63 and 64.

According to the surveying system 1 of the present embodiment, the arithmetic control unit 28 controls the deflection using the optical axis-deflecting unit 35, then executes two-dimensional scanning using the distance-measuring light 49 with the distance-measuring optical axis 53 as an approximate center, and at the same time controls the two-dimensional scanning using the scanning pattern 77, 77' or 81, which includes an intersection 78 or 82 where the outward passage and the return passage of the two-dimensional scanning cross. Then each time the light-receiving signal is detected during the two-dimensional scanning, the arithmetic control unit 28 updates the three-dimensional data of the measurement target based on the deflection data (detection result by the emitting direction-detecting unit 38) and the distance measurement data (detection result by the distance-measuring unit 42). Since the three-dimensional data can be acquired and updated each time the light-receiving signal is detected during the two-dimensional scanning like this, the arithmetic control unit 28 can track the measurement target at high-speed, even if a predetermined amount of three-dimensional data is not stored. Here each time the three-dimensional data is updated, the arithmetic control unit 28 generates the weights for detecting the reference point and for detecting the rotation angle of the measurement target in accordance with the distance from the intersection 78 or 82, of the scanning pattern 77, 77' or 81, and tracks the measurement target based on the reference point position and the rotation angle of the measurement target calculated using the weights. Therefore even in the case of acquiring and updating the three-dimensional data each time the light-receiving signal is detected during the two-dimensional scanning, the arithmetic control unit 28 can decrease the time required for the arithmetic processing and track the measurement target at high-speed. Thereby the surveying system 1 according to the present embodiment can track the measurement target more precisely with decreasing the possibility of losing the measurement target.

The arithmetic control unit 28 generates the weights for detecting the reference point of the measurement target such that the value increases as the distance from the intersection 78 or 82 of the scanning pattern 77, 77' or 81 decreases, therefore the reference point of the measurement target can be detected at high accuracy. Thereby the surveying system 1 of the present embodiment can track the measurement target more precisely.

The arithmetic control unit 28 also generates the weights for detecting the rotation angle of the measurement target such that the value increases as the distance from the intersection 78 or 82 of the scanning pattern 77, 77' or 81 increases, therefore the rotation angle of the measurement target can be detected at higher accuracy. Thereby the surveying system 1 of the present embodiment can track the measurement target more precisely.

For detecting the rotation angle of the measurement target, the arithmetic control unit 28 also generates the first correction data in which an intensity distribution of the light-receiving signal is reversed at a first coordinate (x axis in the present embodiment) of the orthogonal coordinate axes in the two-dimensional scanning. Moreover, for detecting the rotation angle of the measurement target, the arithmetic control unit 28 also generates the second correction data in which the intensity distribution of the light-receiving signal is reversed at a second coordinate axis (y axis in the present embodiment) of the orthogonal coordinate axes in the two-dimensional scanning. Then the arithmetic control unit 28 tracks the measurement target based on the rotation angle of the measurement target calculated using the weight for detecting the rotation angle generated in accordance with the distance from the intersection 78 or 82 of the scanning pattern 77, 77' or 81, and at least one of the first correction data and the second correction data. Therefore even in a case where the arithmetic control unit 28 generates the weights for detecting the reference point and for detecting the rotation angle of the measurement target in accordance with the distance from the intersection 78 or 82 of the scanning pattern 77, 77' or 81, it can be prevented that the intensity distributions of the light-receiving signal cancel each other. Thereby the surveying system 1 of the present embodiment can track the measurement target more precisely.

The arithmetic control unit 28 also generates the first correction data by reversing the intensity distribution of the light-receiving signal at the first coordinate axis (x axis in the present embodiment), and then further inverting only the intensity distribution, which was reversed at the first coordinate axis, with the second coordinate (y axis in the present embodiment) as the center. Moreover, the arithmetic control unit 28 generates the second correction data by reversing the intensity distribution of the light-receiving signal at the second coordinate (y axis in the present embodiment), and then further inverting only the intensity distribution, which was reversed at the second coordinate axis (y axis in the present embodiment), with the first coordinate axis (x axis in the present embodiment) as the center. Therefore even in a case where the measurement target does not extend in the vertical and horizontal directions (see FIGS. 11A and 12A), that is, even in a case where the measurement target inclines with respect to the vertical and horizontal directions, it can be prevented that the intensity distributions of the light-receiving signal cancel each other. Thereby the surveying system 1 of the present embodiment can track the measurement target more precisely.

An embodiment of the present invention was described above. However, the present invention is not limited to this embodiment, and may be changed in various ways within a scope not departing from the claims. In the configuration of this embodiment, a part thereof may be omitted or the composing elements thereof may be arbitrarily combined in a way different from the above embodiment. For example, the surveying device main unit 3 is used as the total station in this embodiment, but may be used as a laser scanner.

## Claims

1. A surveying system comprising:
a measurement target including a retro-reflector; and
a surveying device main unit that emits a distance measuring light and measures the measurement target based on reflected distance measuring light from the retro-reflector, wherein
the surveying device main unit includes:
a distance measuring light-emitting unit that includes a light-emitting element to emit the distance-measuring light and emits the distance measuring light onto a distance measuring optical axis;
a light-receiving unit that receives the reflected distance-measuring light and includes a light-receiving element to generate a light-receiving signal;
a distance measuring unit that measures a distance of the measurement target based on the light-receiving signal from the light-receiving element;
an optical axis-deflecting unit that includes a reference optical axis and deflects the distance-measuring optical axis from the reference optical axis;
an emitting direction-detecting unit that detects a deflection angle of the distance-measuring optical axis from the reference optical axis and a direction of the deflection angle; and
an arithmetic control unit that controls a deflection function of the optical axis-deflecting unit and a distance-measuring function of the distance measuring unit, wherein
the optical axis-deflecting unit includes:
a pair of optical prisms that are rotatable centering around the reference optical axis; and
a motor that individually rotates the optical prisms independently from each other, wherein
the arithmetic control unit: controls the deflection caused by the optical axis-deflecting unit by controlling the rotation direction, rotation speed and rotation ratio of the pair of optical prisms; executes two-dimensional scanning with the distance-measuring light with the distance-measuring optical axis as an approximate center, and controls the two-dimensional scanning with the scanning pattern having an intersection at which an outward passage and a return passage of the two-dimensional scanning intersect; updates three-dimensional data of the measurement target based on a deflection angle data, which is a detection result by the emitting direction-detecting unit, and a distance measurement data, which is a detection result by the distance-measuring unit, each time the light-receiving signal is detected during the two-dimensional scanning; generates weights for detecting a reference point of the measurement target and for detecting a rotation angle of the measurement target in accordance with the distance from the intersection, each time the three-dimensional data is updated; and tracks the measurement target based on the reference point position and the rotation angle of the measurement target calculated using the weights.

2. The surveying system according to claim 1, wherein
the arithmetic control unit generates the weight for detecting the reference point such that the value increases as the distance from the intersection decreases.

3. The surveying system according to claim 1 or 2, wherein
the arithmetic control unit generates the weight for detecting the rotation angle such that the value increases as the distance from the intersection increases.

4. The surveying system according to any one of claims 1 to 3, wherein
for detecting the rotation angle of the measurement target, the arithmetic control unit further generates first correction data in which an intensity distribution of the light-receiving signal is reversed at a first coordinate axis of the orthogonal coordinate axes in the two-dimensional scanning, and second correction data in which the intensity distribution of the light-receiving signal is reversed at a second coordinate axis of the orthogonal axes, and tracks the measurement target based on the rotation angle calculated using the weight for detecting the rotation angle generated in accordance with the distance from the intersection, and at least one of the first correction data and the second correction data.

5. The surveying system according to claim 4, wherein
the arithmetic control unit generates the first correction data by reversing the intensity distribution of the light-receiving signal at the first coordinate axis and then further inverting only the intensity distribution, which is reversed at the first coordinate axis, with the second coordinate axis as the center, and generates the second correction data by reversing the intensity distribution of the light-receiving signal at the second coordinate axis and then further inverting only the intensity distribution, which is reversed at the second coordinate axis, with the first coordinate axis as the center.
